# EUROPÄISCHE PATENTANMELDUNG

(11) **EP 4 194 326 A1**
(43) Veröffentlichungstag der Anmeldung: **14.06.2023**
(21) Anmeldenummer: 22211279.9
(22) Anmeldetag: 05.12.2022
(51) Int. Cl.: B62M 6/55

(54) **ANTRIEBSANORDNUNG EINES ELEKTROFAHRRADS**

(30) Priorität: 07.12.2021 DE 102021213870
(71) Anmelder: Robert Bosch GmbH, 70442 Stuttgart (DE)
(72) Erfinder: Nguyen, Quoc-Dat, 72654 Neckartenzlingen (DE); Binder, Julian, 72827 Wannweil (DE); Brakowski, Timo, 96049 Bamberg (DE)

(57) **Zusammenfassung**

Die Erfindung betrifft eine Antriebsanordnung (1) eines Elektrofahrrads (100), umfassend eine Antriebseinheit (2), und eine Rahmenschnittstelle (3), wobei die Antriebseinheit (2) eine Abtriebswelle (21), einen Motor (25) mit einer Motorwelle (22), und ein Getriebe (26), welches Abtriebswelle (21) Motorwelle (22) miteinander verbindet, aufweist, wobei die Abtriebswelle (21) orthogonal zur Motorwelle (22) ist, wobei die Rahmenschnittstelle (3) eine erste Wand (31) und eine zweite Wand (32) aufweist, wobei die Antriebseinheit (2) zumindest teilweise zwischen der ersten Wand (31) und der zweiten Wand (32) angeordnet ist, wobei jede Wand (31, 32) einen Haltebereich (34) mit jeweils einer Ausnehmung (30) aufweist, welche den jeweiligen Haltebereich (34) entlang einer Richtung parallel zur Abtriebswelle (21) durchdringt, wobei die Abtriebswelle (21) zumindest teilweise in den Ausnehmungen (30) der Haltebereiche (34) angeordnet ist, und wobei die Antriebseinheit (2) an jedem Haltebereich (34) in mindestens einem Anbindungspunkt (5) an der Rahmenschnittstelle (3) befestigt ist.

## Beschreibung

### Stand der Technik

Die vorliegende Erfindung betrifft eine Antriebsanordnung eines Elektrofahrrads, ein die Antriebsanordnung umfassendes Elektrofahrrad, und ein Verfahren zur Montage einer Antriebsanordnung.

Bekannt sind Antriebsanordnungen für Elektrofahrräder in orthogonaler Bauart. Dabei ist eine Motorwelle eines Motors der Antriebseinheit orthogonal zu einer Abtriebswelle der Antriebseinheit angeordnet. Zur Befestigung der Antriebseinheit an einem Fahrradrahmen ist üblicherweise eine Verschraubung vorgesehen. Häufig weist die Antriebseinheit vorstehende Laschen auf, welche mit dem Fahrradrahmen verschraubt werden. Aufgrund von im Bereich des Tretlagers, also im Bereich der Abtriebswelle, begrenztem Bauraum sind derartige Laschen meist weiter abgespreizt und beschränken unter anderem häufig den Freiraum für Gelenke oder Verbindungspunkte, an welchen Kettenstreben eines gefiederten Hinterbaus angebracht werden könnten.

### Offenbarung der Erfindung

Die erfindungsgemäße Antriebsanordnung mit den Merkmalen des Anspruchs 1 zeichnet sich demgegenüber dadurch aus, dass auf einfache Weise eine Bauraum-optimierte und belastungstechnisch vorteilhafte Halterung einer Antriebseinheit an einer Rahmenschnittstelle bereitgestellt werden kann. Dies wird erreicht durch eine Antriebsanordnung eines Elektrofahrrads, umfassend eine Antriebseinheit und eine Rahmenschnittstelle. Die Antriebseinheit weist dabei eine Abtriebswelle, einen Motor mit einer Motorwelle, und ein Getriebe auf, wobei das Getriebe die Abtriebswelle und die Motorwelle, insbesondere drehmomentübertragend, miteinander verbindet. Die Abtriebswelle ist dabei orthogonal zur Motorwelle angeordnet. Das heißt, die Antriebseinheit ist in orthogonaler Bauart ausgeführt. Insbesondere ist die Abtriebswelle parallel, vorzugsweise koaxial, zu einer Tretlagerachse. Die Rahmenschnittstelle weist dabei eine erste Wand und eine zweite Wand auf, wobei die Antriebseinheit zumindest teilweise zwischen der ersten Wand und der zweiten Wand angeordnet ist. Jede Wand weist zudem einen Haltebereich auf, wobei jeder Haltebereich jeweils eine Ausnehmung aufweist. Die Ausnehmung durchdringt den jeweiligen Haltebereich dabei entlang einer Richtung parallel zur Abtriebswelle. Insbesondere sind die beiden Ausnehmungen der beiden Haltebereiche fluchtend angeordnet. Die Abtriebswelle ist dabei zumindest teilweise in den Ausnehmungen der Haltebereiche angeordnet. Vorzugsweise ist die Ausnehmung offen ausgebildet, beispielsweise U-förmig. Bevorzugt umgreifen die Haltebereiche die Abtriebswelle somit in einer Ebene senkrecht zur Abtriebswelle, beispielsweise gabelförmig. Die Antriebseinheit ist dabei an jedem Haltebereich in mindestens einem Anbindungspunkt an der Rahmenschnittstelle befestigt, vorzugsweise verschraubt.

Das heißt, die Rahmenschnittstelle ist so ausgebildet, dass diese die Antriebseinheit sowohl in einer Ebene parallel zur Abtriebswelle, als auch in einer Ebene senkrecht zur Abtriebswelle jeweils zumindest teilweise umgreift. Dadurch können sich die Haltebereiche sich besonders nahe hin zu einem Mittelpunkt der Abtriebswelle erstrecken. Besonders vorteilhaft ist es dabei, wenn die Verbindung von Antriebseinheit und Haltebereichen dadurch erfolgt, dass diese mittels Schrauben miteinander verschraubt werden. Die Schrauben können hierbei besonders nahe an der Achse der Abtriebswelle angeordnet werden, was sich im Hinblick auf mechanische Belastungen besonders vorteilhaft auswirkt. Insbesondere kann dadurch eine besonders direkte Einleitung mechanischer Kräfte auf kurzem Weg von der Antriebseinheit in die Rahmenschnittstelle erfolgen. Dies erlaubt zudem eine materialsparende und leichtgewichtige und kostengünstige Konstruktion der Antriebsanordnung.

Die Unteransprüche haben bevorzugte Weiterbildungen der Erfindung zum Inhalt.

Bevorzugt weist die Anordnung einen Motorbereich, in welchem der Motor angeordnet ist, und einen Tretlagerbereich auf. Der Tretlagerbereich ist dabei in Axialrichtung der Motorwelle an den Motorbereich angrenzend angeordnet. Im Tretlagerbereich ist die Abtriebswelle angeordnet. Dabei ist der Tretlagerbereich an der Rahmenschnittstelle befestigt. Vorzugsweise erfolgt die Befestigung der Antriebseinheit an der Rahmenschnittstelle ausschließlich im Tretlagerbereich. Somit ist die mechanische Anbindung besonders nahe an der Abtriebswelle angeordnet, um eine optimale direkte Krafteinleitung von der Antriebseinheit in die Rahmenschnittstelle zu ermöglichen.

Besonders bevorzugt weist der Tretlagerbereich der Antriebseinheit ein Gehäuse und einen Gehäusedeckel auf. Gehäuse und Gehäusedeckel sind dabei in einer Trennebene lösbar miteinander verbunden. Die Trennebene ist dabei senkrecht zur Abtriebswelle angeordnet. Die Trennebene ist dabei Kettenblatt-seitig angeordnet. Das heißt, die Trennebene ist auf einer dem Kettenblatt zugewandten Seite der Antriebseinheit angeordnet. Dadurch kann eine einfache Montage der Antriebseinheit, beispielsweise der Abtriebswelle in der Antriebseinheit, ermöglicht werden. Zudem können hierdurch die Kettenblattseitigen höheren Kräfte, die beiden Betrieb der Antriebseinheit bzw. des Elektrofahrrads auftreten, über den Gehäusedeckel in die Antriebseinheit eingeleitet werden. Vorzugsweise dadurch wird eine besonders vorteilhafte mechanische Anbindung ermöglicht, wenn zusätzlich in den Gehäusedeckel ein Lager, über welches die Abtriebswelle gelagert ist, integriert ist.

Vorzugsweise sind der Gehäusedeckel und das Gehäuse entlang einer Axialrichtung der Abtriebswelle zumindest teilweise ineinandergesteckt. Dabei ist zwischen Gehäusedeckel und Gehäuse ein Presssitz ausgebildet. Somit können die Kettenblatt-seitig höheren auftretenden Kräfte über den Presssitz in das Gehäuse und auch den Rest der Antriebseinheit eingeleitet werden.

Bevorzugt umfasst die Antriebsanordnung mehrere Anbindungspunkte pro Haltebereich. Die Anbindungspunkte am jeweiligen Haltebereich sind dabei konzentrisch zur Abtriebswelle angeordnet. Dadurch kann eine besonders gleichmäßige Übertragung der mechanischen Kräfte zwischen Antriebseinheit und Rahmenschnittstelle erfolgen.

Weiter bevorzugt umfasst die Antriebsanordnung ferner ein in die Antriebsanordnung eingeschraubtes Toleranzausgleichselement. Das Toleranzausgleichselement ist dabei derart in die Antriebseinheit eingeschraubt, dass das Toleranzausgleichselement an einer Innenseite der zweiten Wand anliegt, um einen Spalt zwischen der Antriebseinheit und der zweiten Wand zu überbrücken. Dadurch kann eine besonders vorteilhafte mechanische Belastung der Antriebseinheit während eines Betriebs des Elektrofahrrads bereitgestellt werden. Insbesondere können somit durch entsprechende Abstimmung des Toleranzausgleichselements auf eine Abmessung des Spalts Zugbelastungen der Antriebseinheit zuverlässig vermieden werden. Beispielsweise ist es auch möglich, dass Toleranzausgleichselement so einzustellen, dass stets eine gewisse Druckbelastung der Antriebseinheit vorliegt. Dadurch kann eine besonders hohe Dichtigkeit der Antriebseinheit, beispielsweise gegenüber Eindringen von Wasser oder Schmutz sichergestellt werden.

Bevorzugt weist das Toleranzausgleichselements ein Betätigungselement auf, welches zur Betätigung des Toleranzausgleichselements mittels eines Werkzeugs eingerichtet ist. Vorzugsweise ist das Betätigungselement eine Vielzahn-Aussparung, welche insbesondere in der zur zweiten Wand gewandten Stirnseite des Toleranzausgleichselements ausgebildet ist. Alternativ kann das Betätigungselement eine Sechskant-Aussparung oder ein ähnliches mittels eines Werkzeugs betätigbaren Elements sein. Wenn die zweite Wand eine Wandöffnung aufweist, kann das Werkzeug vorzugsweise durch diese Wandöffnung durchgeführt werden, um das Toleranzausgleichselement zu betätigen.

Vorzugsweise weist das Toleranzausgleichselement ein selbstfurchendes Außengewinde auf. Dadurch kann eine besonders einfache und kostengünstige Antriebsanordnung bereitgestellt werden, da das Toleranzausgleichselements, insbesondere ohne dass ein vorheriges Herstellen eines Innengewindes in oder an der Antriebseinheit notwendig ist, einfach direkt in die Antriebseinheit eingeschraubt werden.

Vorzugsweise ist das Toleranzausgleichselement eine Hohlschraube mit einem Außengewinde und einem Innengewinde. Das Außengewinde und das Innengewinde des Toleranzausgleichselements weisen bevorzugt unterschiedliche Gangrichtungen auf. Vorzugsweise ist das Außengewinde ein Linksgewinde, wobei das Innengewinde ein Rechtsgewinde ist. Dadurch kann eine Konterfunktion beim Einschrauben einer Fixierschraube in das Toleranzausgleichselement erreicht werden, wobei die Fixierschraube beispielsweise zur Fixierung der Antriebseinheit an der Rahmenschnittstelle vorgesehen ist.

Bevorzugt umfasst die Antriebsanordnung ferner ein Befestigungselement, welches die Antriebseinheit in radialer Richtung bezüglich einer Axialrichtung der Motorwelle in der Rahmenschnittstelle fixiert. Bevorzugt erfolgt die Fixierung im Bereich des Motors, insbesondere am Motorbereich. Dadurch wird eine zusätzliche Halterung der Antriebseinheit in der Rahmenschnittstelle bereitgestellt, sodass die Antriebseinheit besonders zuverlässig und fest fixiert werden kann. Beispielsweise ist dies besonders vorteilhaft, wenn zumindest ein Teilbereich der Antriebseinheit in einen rohrförmigen Bereich der Rahmenschnittstelle eingeschoben ist, wobei die Fixierung mittels des Befestigungselements innerhalb dieses rohrförmigen Bereichs erfolgt. Dadurch wird eine relative Bewegung von Antriebseinheit und Rahmenschnittstelle zuverlässig verhindert, wodurch beispielsweise ein Anschlagen und eine damit verbundene Geräuschentwicklung aufgrund von Vibrationen oder einer Verwindung eines Rahmens des Elektrofahrrads verhindert werden kann.

Vorzugsweise weist das Befestigungselement eine Blindnietmutter auf, welche an der Antriebseinheit befestigt ist. Zudem umfasst das Befestigungselement eine Schraube, welche insbesondere in die Blindnietmutter eingeschraubt ist. Bevorzugt ist die Antriebseinheit dabei über die Blindnietmutter und die Schraube an der Rahmenschnittstelle verschraubt. Dadurch kann die zusätzliche Fixierung mittels des Befestigungselements besonders einfach und kostengünstig ausgeführt werden.

Bevorzugt umfasst das Befestigungselement ferner ein Abstandselement, welches in der Blindnietmutter angeordnet ist. Mittels des Abstandselements kann beispielsweise ein Abstand zwischen der Antriebseinheit und der Rahmenschnittstelle definiert eingestellt werden, um eine besonders flexible und optimal anpassbare Fixierung zu ermöglichen. Zudem kann beispielsweise durch eine entsprechende Form des Abstandselements eine definierte Auflagefläche an der Rahmenschnittstelle, beispielsweise wenn diese im Bereich des Befestigungselements ein rundes Rohr ist, für eine optimierte Kraftverteilung ermöglicht werden. Bevorzugt ist das Abstandselement aus einem Elastomer gebildet, um eine elastische Anpassung an eine entsprechende Rahmenkontur durch elastische Verformung des Abstandselements zu ermöglichen.

Besonders bevorzugt ist die Rahmenschnittstelle zumindest teilweise rohrförmig ausgebildet, wobei zumindest ein Teilbereich der Antriebseinheit innerhalb des rohrförmigen Bereichs der Rahmenschnittstelle angeordnet ist. Vorzugsweise ist der Motorbereich innerhalb des rohrförmigen Bereichs der Rahmenschnittstelle angeordnet. Dadurch kann der Motor der Antriebseinheit besonders gut geschützt werden, beispielsweise vor mechanischen Krafteinwirkungen und/oder Witterungseinflüssen.

Weiterhin betrifft die Erfindung ein Elektrofahrrad, welches die beschriebene Antriebsanordnung umfasst. Ein durch den Motor der Antriebseinheit erzeugtes Drehmoment ist dabei vorgesehen zur Unterstützung einer durch Muskelkraft erzeugten manuellen Tretkraft eines Fahrers des Elektrofahrrads.

Bevorzugt umfasst das Elektrofahrrad einen Fahrradrahmen, wobei die Rahmenschnittstelle ein integraler Bestandteil des Fahrradrahmens ist. Die Rahmenschnittstelle kann dabei in eine Sattelstütze des Fahrradrahmens integriert sein bzw. einen Teil der Sattelstütze bilden. Alternativ kann die Rahmenschnittstelle in ein Unterrohr des Fahrradrahmens integriert sein bzw. einen Teil des Unterrohrs bilden. Vorzugsweise kann die Rahmenschnittstelle, wenn diese in das Unterrohr integriert ist, derart ausgerichtet sein, dass die Motorwelle parallel zu einer Verbindungslinie von Naben des Elektrofahrrads ist. Das heißt, die Motorwelle ist in diesem Fall parallel zu einem Untergrund, auf welchem sich das Elektrofahrrad befindet, angeordnet. Somit kann eine besonders flexible Anordnung und Ausrichtung der Antriebseinheit am Fahrradrahmen ermöglicht werden.

Weiterhin führt die Erfindung zu einem Verfahren zur Montage einer Antriebsanordnung, bevorzugt zur Montage der oben beschriebenen Antriebsanordnung. Das Verfahren umfasst die Schritte, welche in der beschriebenen Reihenfolge nacheinander ausgeführt werden:
- Positionieren einer Antriebseinheit zumindest teilweise zwischen einer ersten Wand und einer zweiten Wand einer Rahmenschnittstelle, derart, dass eine Abtriebswelle der Antriebseinheit in jeweils einer Ausnehmung eines Haltebereichs jeder Wand angeordnet ist,
- Fixieren der Antriebseinheit mittels eines Befestigungselements in der Rahmenschnittstelle in radialer Richtung bezüglich einer Richtung einer Motorwelle der Antriebseinheit, und
- Befestigen der Antriebseinheit an der ersten Wand und an der zweiten Wand jeweils durch Verschrauben der Antriebseinheit mit jedem Haltebereich an jeweils mindestens einem Anbindungspunkt. Das heißt, die Antriebseinheit wird zuerst in die Rahmenschnittstelle eingeschoben und mittels des Befestigungselements fixiert, vorzugsweise am Motorbereich. Anschließend erfolgt die Befestigung, insbesondere Verschraubung, vorzugsweise am Tretlagerbereich, durch Verschrauben der Antriebseinheit und der Rahmenschnittstelle miteinander. Dadurch kann eine vereinfachte Montage ermöglicht werden, da die Antriebseinheit beispielsweise mit einer Hand in die Rahmenschnittstelle eingeschoben und mittels des Befestigungselements vorfixiert werden kann. Anschließend ist beispielsweise die andere Hand frei, um die Schrauben für die eigentliche Verschraubung ansetzen und festschrauben zu können.

### Kurze Beschreibung der Zeichnungen

Im Folgenden wird die Erfindung anhand von Ausführungsbeispielen in Verbindung mit den Figuren beschrieben. In den Figuren sind funktional gleiche Bauteile jeweils mit gleichen Bezugszeichen gekennzeichnet. Dabei zeigt:
- Figur 1: eine vereinfachte Ansicht einer Antriebsanordnung eines Elektrofahrrads gemäß einem ersten Ausführungsbeispiel der Erfindung,
- Figur 2: eine Schnittansicht der Antriebsanordnung der Figur 1,
- Figur 3: eine vereinfachte Ansicht einer Antriebseinheit der Antriebsanordnung der Figur 1,
- Figur 4: eine vereinfachte Schnittansicht eines Details der Antriebsanordnung der Figur 1 während der Montage,
- Figur 5: eine weitere vereinfachte Schnittansicht eines Details der Antriebsanordnung der Figur 1 während der Montage,
- Figur 6: weitere vereinfachte Schnittansicht eines Details der Antriebsanordnung der Figur 1 während der Montage,
- Figur 7: eine vereinfachte Ansicht einer Antriebsanordnung eines Elektrofahrrads gemäß einem zweiten Ausführungsbeispiel der Erfindung,
- Figur 8: eine vereinfachte Ansicht einer Antriebsanordnung eines Elektrofahrrads gemäß einem dritten Ausführungsbeispiel der Erfindung,
- Figur 9: eine vereinfachte Teil-Schnittansicht einer Antriebsanordnung eines Elektrofahrrads gemäß einem vierten Ausführungsbeispiel der Erfindung, und
- Figur 10: eine Detail-Schnittansicht der Antriebsanordnung der Figur 9.

### Bevorzugte Ausführungsformen der Erfindung

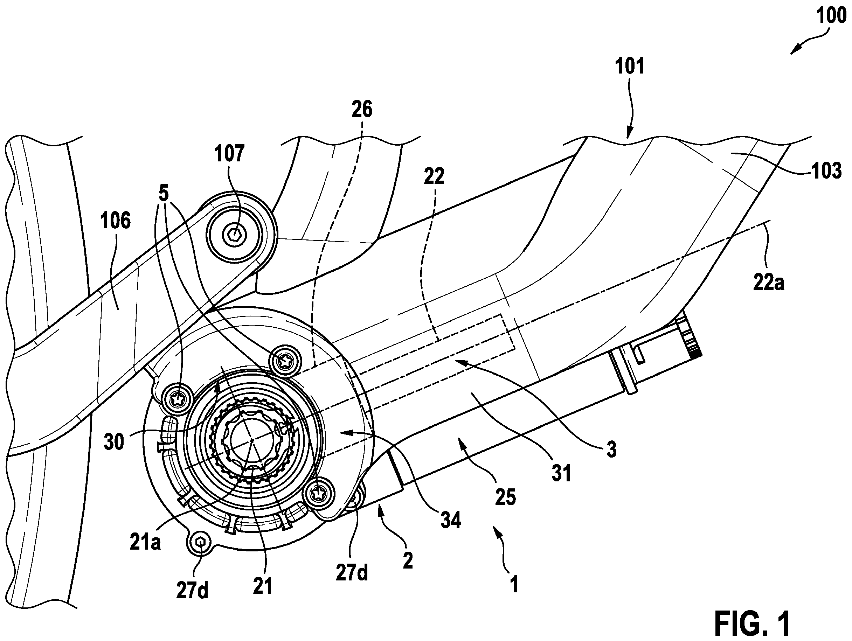

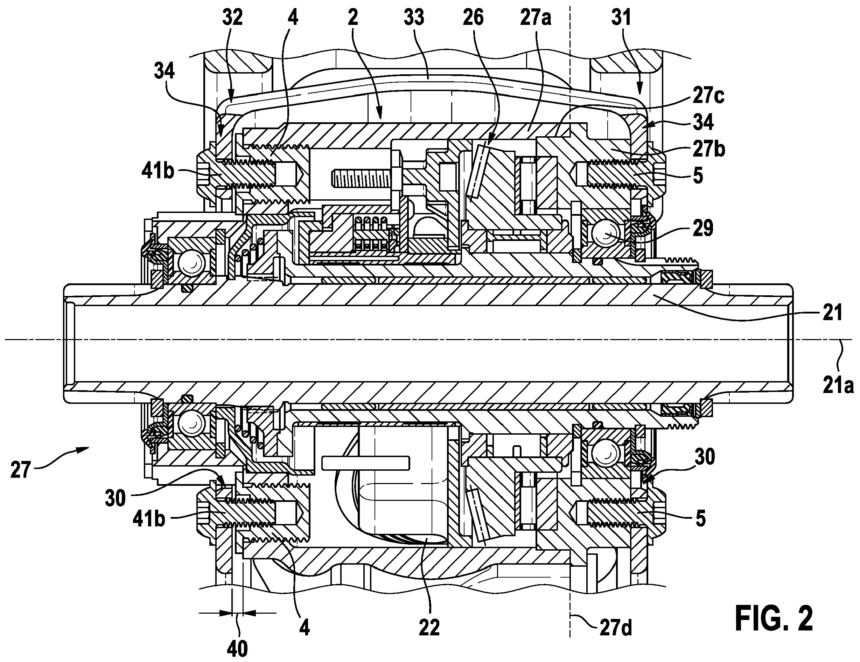

Figur 1 zeigt eine vereinfachte Ansicht einer Antriebsanordnung 1 eines Elektrofahrrads 100 gemäß einem ersten Ausführungsbeispiel der Erfindung. Dargestellt ist dabei ein Teilbereich des Elektrofahrrads 100 im Bereich eines Tretlagers. In der Figur 2 ist eine Schnittansicht der Antriebsanordnung 1 der Figur 1 dargestellt.

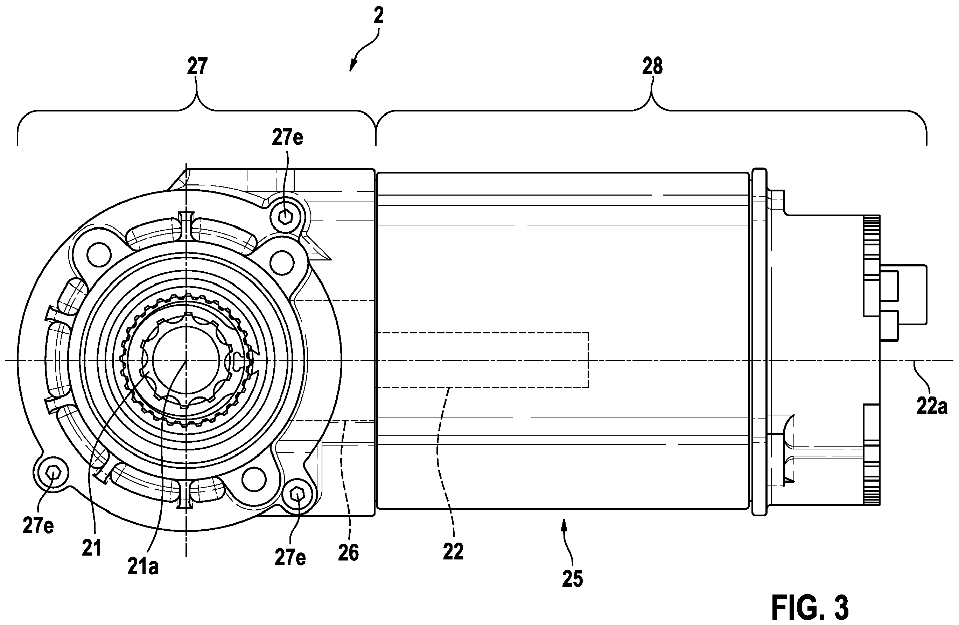

Die Antriebsanordnung 1 umfasst eine Antriebseinheit 2 und eine Rahmenschnittstelle 3. In der Figur 3 ist Antriebseinheit 2 alleine dargestellt.

Die Rahmenschnittstelle 3 ist integraler Bestandteil eines Fahrradrahmens 101 des Elektrofahrrads 100. Im Detail ist die Rahmenschnittstelle 3 im ersten Ausführungsbeispiel der Figur 1 ein Teilbereich eines Unterrohrs 103 des Fahrradrahmens 101.

Die Antriebseinheit 2 umfasst einen Motor 25, welcher als Elektromotor ausgebildet ist, und welcher vorzugsweise von einem (nicht dargestellten) elektrischen Energiespeicher mit elektrischer Energie versorgt wird. Der Motor 25 kann ein Motormoment bereitstellen, mittels welchem eine von einem Fahrer des Elektrofahrrads 100 mittels Muskelkraft erzeugtes Tretmoment unterstützt werden kann.

Die Antriebseinheit 2 umfasst eine Abtriebswelle 21, welche mit einem (nicht dargestellten) Kettenblatt verbunden oder verbindbar ist. Im gezeigten ersten Ausführungsbeispiel ist die Abtriebswelle 21 als Hohlwelle ausgebildet. Die Abtriebswelle 21 definiert eine Abtriebsachse 21a, welche auch als Tretlagerachse angesehen werden kann.

Zudem umfasst die Antriebseinheit 2 eine Motorwelle 22, mittels welcher das vom Motor 25 erzeugte Motormoment übertragen wird, und ein Getriebe 26, welches Abtriebswelle 21 und Motorwelle 22 drehmomentübertragend miteinander verbindet. Getriebe 26 und Motorwelle 22 sind in den Figuren 1 und 3 gestrichelt angedeutet und befinden sich im Inneren der Antriebseinheit 2.

Motorwelle 22 und Abtriebswelle 21 sind orthogonal zueinander angeordnet. Somit handelt es sich bei der Antriebseinheit 2 um einen Antrieb in orthogonaler Bauart.

Die Antriebseinheit 2 weist dabei einen Motorbereich 28, innerhalb welchem der Motor 25 mit der Motorwelle 22 angeordnet ist, und einen Tretlagerbereich 27, innerhalb welchem die Abtriebswelle 21 angeordnet ist, auf (vergleiche Figur 3).

Die Rahmenschnittstelle 3 umfasst eine erste Wand 31 und eine zweite Wand 32, welche U-förmig angeordnet sind und mittels einer Verbindungswand 33 miteinander verbunden sein (vergleiche Figur 2). Die Antriebseinheit 2 ist in montiertem Zustand teilweise zwischen der ersten Wand 31 und der zweiten Wand 32 der Antriebseinheit 2 angeordnet. Dabei weist jede der Wände 31, 32 der Rahmenschnittstelle 3 jeweils einen Haltebereich 34 auf, in welchem jeweils eine Ausnehmung 30 ausgebildet ist. Die Ausnehmung 30 ist dabei jeweils halbkreisförmig. Die Haltebereiche 34 sind somit Kreisringsegment-förmig ausgebildet und bilden eine Art gabelförmige Aufnahme. Die Antriebseinheit 2 ist dabei so der Rahmenschnittstelle 3 angeordnet, dass die Abtriebswelle 21 teilweise innerhalb der Ausnehmungen 30 der Haltebereiche 34 angeordnet ist. Im Detail sind die Haltebereiche 34, die Ausnehmungen 30, und die Abtriebswelle 21 konzentrisch angeordnet.

An jedem Haltebereich 34 ist der Tretlagerbereich 27 der Antriebseinheit 2 an jeweils drei um den Umfang der Ausnehmungen 30 gleichmäßig verteilt angeordneten Anbindungspunkten 5 mittels Schrauben mit der Rahmenschnittstelle 3 verschraubt. Die Anbindungspunkte 5 befinden sich dabei möglichst nahe an radial inneren Seite des jeweiligen Haltebereichs 34. Dadurch kann bei platzsparender und leichtgewichtiger Konstruktion der Antriebsanordnung 1 eine mechanisch besonders vorteilhafte Befestigung der Antriebseinheit 2 an der Rahmenschnittstelle 3 ermöglicht werden. Dadurch, dass die Anbindungspunkte 5 besonders nahe an der Abtriebswelle 21 angeordnet sein können, kann eine direkte Einleitung von Kräften, welche beim Betrieb der Antriebsanordnung 1 auftreten, in die Rahmenschnittstelle 3 erfolgen. Beispielsweise können dadurch radial außerhalb der Anbindungspunkte 5 liegende Bereiche der Rahmenschnittstelle 3 und/oder der Antriebseinheit 2 dünnwandiger und leichtgewichtiger ausgestaltet werden.

Ein weiterer Vorteil ist, dass durch die besonders kompakte Anordnung und Befestigung der Antriebseinheit 2 ein erhöhtes Platzangebot für einen Hinterbau des Elektrofahrrads 100 zur Verfügung steht. Beispielsweise kann ein Hauptgelenk 107, an welchem eine Kettenstrebe 106 des Hinterbaus drehbar am Fahrradrahmen 100 gelagert ist, dadurch besonders flexibel, insbesondere nahe an der Abtriebsachse 21a angeordnet werden. Dadurch kann eine optimale kinematische Auslegung des Elektrofahrrads 100 besonders flexibel ausgestaltet werden.

Wie in der Figur 2 zu erkennen, ist die Antriebseinheit 2 im Bereich des Tretlagerbereichs 27, der in der Figur 2 geschnitten dargestellt ist, zweiteilig ausgebildet mit einem Gehäuse 27a und einem Gehäusedeckel 27b. Gehäuse 27a und Gehäusedeckel 27b sind dabei in einer Trennebene 27d lösbar miteinander verbunden. Die Trennebene 27d ist senkrecht zur Abtriebsachse 21a der Abtriebswelle 21 angeordnet.

Zwischen Gehäuse 27a und Gehäusedeckel 27b ist ein Presssitz 27c ausgebildet, um eine präzise zentrierte und stabile Verbindung zwischen Gehäuse 27a und Gehäusedeckel 27b bereitzustellen. Eine Fixierung des Gehäusedeckel 27b am Gehäuse 27a erfolgt mittels mehrerer Schrauben 27e, welche in Figur 1 und 3 zu erkennen sind.

Zudem ist die Trennebene 27d auf der dem (nicht dargestellten) Kettenblatt zugewandten Seite der Antriebseinheit 2 angeordnet. Dadurch ist es auf einfache und platzsparende Weise möglich, eine mechanisch besonders stabile Anordnung bezüglich einer Lagerung der Abtriebswelle 21 bereitzustellen. Im Detail kann hierbei eine optimierte Anordnung des Lagers 29 auf der Kettenblattzugewandten Seite bereitgestellt werden, indem das Lager 29 im Deckel 27b untergebracht werden kann. Zusätzlich können die Anbindungspunkte 5 im Deckel 27b untergebracht werden, wodurch insgesamt eine besonders direkte Kraftübertragung von der Abtriebswelle 21 an die erste Wand 31 der Rahmenschnittstelle 3 erfolgt. Damit wird zudem eine besonders kompakte und leichtgewichtige Konstruktion ermöglicht.

Wie in der Figur 2 zu erkennen, erfolgt an der ersten Wand 31 eine direkte Verschraubung von Antriebseinheit 2 und Rahmenschnittstelle 3 miteinander. Das heißt, die Rahmenschnittstelle 2 liegt an einer Innenseite der ersten Wand 31 der Rahmenschnittstelle 3 an.

An der zweiten Wand 32 kann gemäß einer (nicht dargestellten) Ausführungsform ebenfalls eine direkte Verschraubung derart erfolgen, dass Antriebseinheit 2 und Rahmenschnittstelle 3 unmittelbar aneinander anliegen. Hierfür kann die Antriebsanordnung 1 beispielsweise so ausgelegt werden, dass beim Verschrauben eine geringfügige Verformung der zweiten Wand 32 auftritt.

Alternativ kann gemäß dem ersten Ausführungsbeispiel der Figuren 1 bis 6 ein Toleranzausgleichselement 4 vorgesehen sein. Das Toleranzausgleichselement 4 ist an einer dem Gehäusedeckel 27b gegenüberliegenden Seite des Gehäuses 27a vorgesehen und als Hohlschraube ausgebildet.

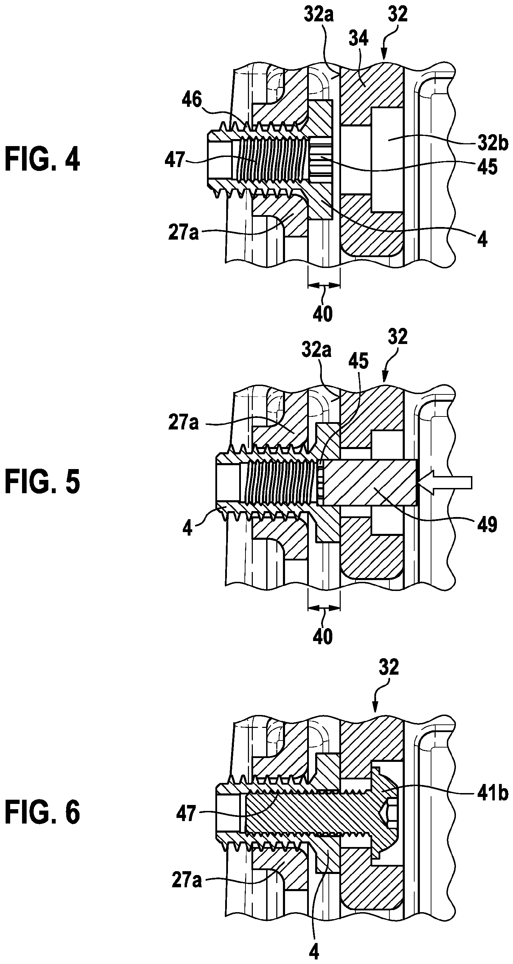

Die Verwendung des Toleranzausgleichselements 4 ist im Detail in die Figuren 4 bis 6 dargestellt.

Das Toleranzausgleichselement 4 weist ein selbstfurchendes Außengewinde 46, welches als Linksgewinde ausgebildet ist, auf. Hiermit ist das Toleranzausgleichselement 4 vollständig in eine Öffnung des Gehäuses 27 a eingeschraubt. In diesem Zustand wird die Antriebseinheit 2 in der Rahmenschnittstelle 3 angeordnet, derart, dass das Toleranzausgleichselement 4 und eine Wandöffnung 32b des Haltebereichs 34 der zweiten Wand 32 fluchtend angeordnet sind. Anschließend wird von außen durch die Wandöffnung 32b ein Betätigungselement 49 in eine Vielzahn-Aussparung 45 des Toleranzausgleichselements 4 eingeführt. Mittels des Betätigungselements 49 wird das Toleranzausgleichselement 4 nun herausgeschraubt, bis dieses an einer Innenseite 32a der zweiten Wand 32 anliegt. Dadurch wird durch das Toleranzausgleichselement 4 ein Spalt 40 zwischen Gehäuse 27a und zweiter Wand 32 überbrückt.

Anschließend kann, wie in Figur 6 dargestellt, eine Fixierschraube 41b von außen in das Innengewinde 47 des Toleranzausgleichselements 4 eingeschraubt werden, um Gehäuse 2 und zweite Wand 32 der Rahmenschnittstelle 3 aneinander zu befestigen.

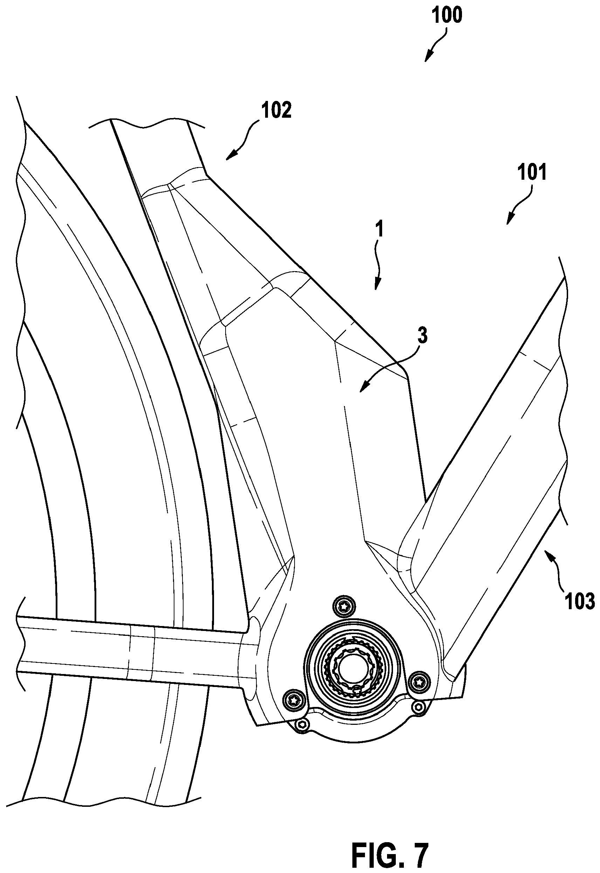

In Figur 7 ist eine vereinfachte Ansicht einer Antriebsanordnung 1 eines Elektrofahrrads 100 gemäß einem zweiten Ausführungsbeispiel der Erfindung dargestellt. Das zweite Ausführungsbeispiel entspricht im Wesentlichen dem ersten Ausführungsbeispiel der Figur 1 mit dem Unterschied, dass die Rahmenschnittstelle 3 nicht im Unterrohr 103 des Fahrradrahmens 101 angeordnet ist. Stattdessen ist die Rahmenschnittstelle 3 in eine Sattelstütze 102 des Fahrradrahmens 101 integriert. Weiterhin ist im Gegensatz zum Ausführungsbeispiel der Figur 1, in welchem die Rahmenschnittstelle 3 im Bereich des Motorbereichs 28 nach unten offen ist, geschlossen ausgebildet. Das heißt, die Rahmenschnittstelle 3 umschließt den Motorbereich 28 in Umfangsrichtung vollständig.

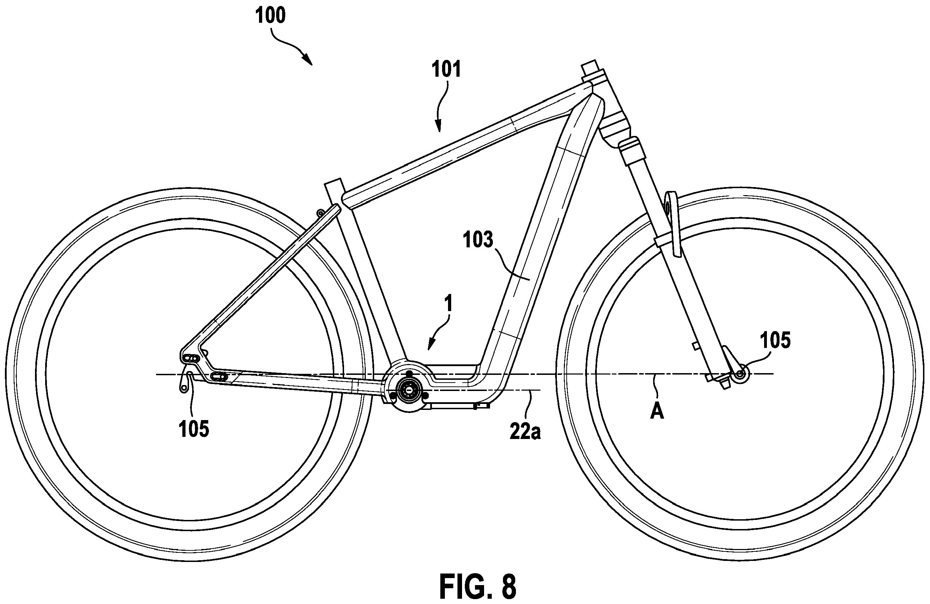

In Figur 8 ist eine vereinfachte Ansicht einer Antriebsanordnung 1 eines Elektrofahrrads 100 gemäß einem dritten Ausführungsbeispiel der Erfindung dargestellt. Das dritte Ausführungsbeispiel entspricht im Wesentlichen dem ersten Ausführungsbeispiel der Figur 1 mit dem Unterschied, dass das Unterrohr 103 einen an das Tretlager angrenzenden Bereich aufweist, welcher parallel zum Untergrund des Elektrofahrrads 100 ist. Im Detail ist dieser Bereich parallel zu einer virtuellen Linie A, welche die Naben 105 des Elektrofahrrads 100 miteinander verbindet. Dadurch ist auch die Motorachse 22a der Motorwelle 22 parallel zu der Linie A. Dadurch kann eine alternative Rahmengeometrie des Fahrradrahmens 101 bereitgestellt werden.

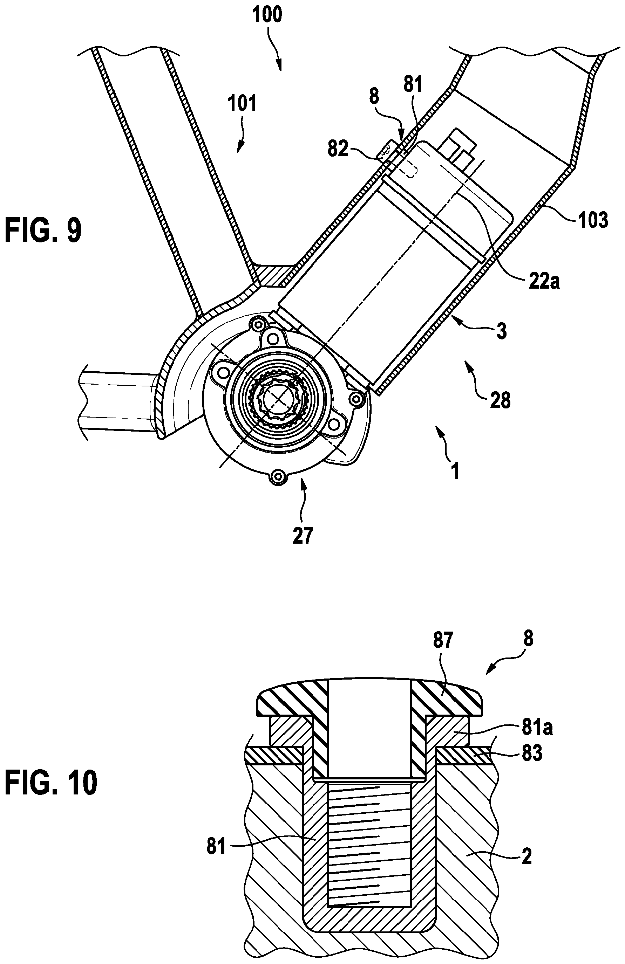

In Figur 9 ist eine vereinfachte Teil-Schnittansicht einer Antriebsanordnung 1 eines Elektrofahrrads 100 gemäß einem vierten Ausführungsbeispiel der Erfindung dargestellt. Das vierte Ausführungsbeispiel entspricht im Wesentlichen dem ersten Ausführungsbeispiel der Figur 1 mit dem Unterschied, dass das Unterrohr 103 in dem Bereich, in welchem der Motorbereich 28 der Antriebseinheit 2 angeordnet ist, rohrförmig, das heißt umlaufend geschlossen ausgebildet ist. Insbesondere sind dabei die erste Wand 31 und die zweite Wand 32 zumindest teilweise ein Teil des rohrförmigen Bereichs. Dadurch wird der Motorbereich 28 umlaufend durch das Unterrohr 103 geschützt.

Die Antriebsanordnung 1 weist im vierten Ausführungsbeispiel der Figur 9 zusätzlich ein Befestigungselement 8 auf, welches eingerichtet ist, den Motorbereich 28 in radialer Richtung innerhalb des Unterrohrs 103 zu fixieren. Das Befestigungselement 8 weist dabei eine Blindnietmutter 81, welche in eine Wand des Motorbereichs 28 eingepresst ist, auf. Die Blindnietmutter 81 weist ein Innengewinde auf.

Zudem weist das Befestigungselement 8 eine Schraube 82 auf, welche von außerhalb des Unterrohrs 103 durch eine Wand des Unterrohrs 103 in das Innengewinde der Blindnietmutter 81 eingeschraubt ist. Die Wand des Unterrohrs 103 wird somit zwischen Blindnietmutter 81 und Schraube 82 eingeklemmt, wodurch die Antriebseinheit 2 insbesondere in radialer Richtung bezüglich der Motorachse 22a, an der Rahmenschnittstelle 3 fixiert wird.

Figur 10 zeigt eine Detail-Schnittansicht des vierten Ausführungsbeispiels der Figur 9. Dargestellt ist dabei die in die Wand des Motorbereichs 28 der Antriebseinheit 2 eingepresste Blindnietmutter 81 sowie weitere optional vorhandene Elemente. Im Detail kann an einer Außenseite der Antriebseinheit 2 und unterhalb eines Kopfes 81a der Blindnietmutter 81 eine Dichtung 83 angeordnet sein, um einen Fluideintritt in die Antriebseinheit 2 zu verhindern.

Zudem kann ein Abstandselement 87 vorgesehen sein, welches in der Blindnietmutter 81 angeordnet ist. Das Abstandselement 87 ist vorzugsweise aus einem Elastomer gebildet und eingerichtet, um einen vordefinierten Abstand von Antriebseinheit 2 und Wand des Unterrohrs 103, an welcher die Antriebseinheit 2 mittels der Schraube 82 befestigt wird, anpassen zu können.

## Patentansprüche

1. Antriebsanordnung eines Elektrofahrrads, umfassend:
- eine Antriebseinheit (2), und
- eine Rahmenschnittstelle (3),
- wobei die Antriebseinheit (2) eine Abtriebswelle (21), einen Motor (25) mit einer Motorwelle (22), und ein Getriebe (26), welches Abtriebswelle (21) Motorwelle (22) miteinander verbindet, aufweist,
- wobei die Abtriebswelle (21) orthogonal zur Motorwelle (22) ist,
- wobei die Rahmenschnittstelle (3) eine erste Wand (31) und eine zweite Wand (32) aufweist,
- wobei die Antriebseinheit (2) zumindest teilweise zwischen der ersten Wand (31) und der zweiten Wand (32) angeordnet ist,
- wobei jede Wand (31, 32) einen Haltebereich (34) mit jeweils einer Ausnehmung (30) aufweist, welche den jeweiligen Haltebereich (34) entlang einer Richtung parallel zur Abtriebswelle (21) durchdringt,
- wobei die Abtriebswelle (21) zumindest teilweise in den Ausnehmungen (30) der Haltebereiche (34) angeordnet ist, und
- wobei die Antriebseinheit (2) an jedem Haltebereich (34) in mindestens einem Anbindungspunkt (5) an der Rahmenschnittstelle (3) befestigt ist.

2. Antriebsanordnung nach Anspruch 1,
- wobei die Antriebseinheit (2) einen Motorbereich (28), in welchem der Motor (25) angeordnet ist, und einen in Axialrichtung der Motorwelle (22) an den Motorbereich (28) angrenzenden Tretlagerbereich (27), in welchem die Abtriebswelle (21) angeordnet ist, aufweist, und
- wobei, insbesondere ausschließlich, der Tretlagerbereich (27) an der Rahmenschnittstelle (3) befestigt ist.

3. Antriebsanordnung nach Anspruch 2,
- wobei der Tretlagerbereich (27) der Antriebseinheit (2) ein Gehäuse (27a) und einen Gehäusedeckel (27b) aufweist,
- wobei Gehäuse (27a) und Gehäusedeckel (27b) in einer Trennebene (27d), welche senkrecht zur Abtriebswelle (21) ist, lösbar miteinander verbunden sind, und
- wobei die Trennebene (27d) kettenblatt-seitig angeordnet ist.

4. Antriebsanordnung nach Anspruch 3,
- wobei der Gehäusedeckel (27b) und das Gehäuse (27a) entlang einer Axialrichtung der Abtriebswelle (21) zumindest teilweise ineinandergesteckt sind, und
- wobei zwischen Gehäusedeckel (27b) und Gehäuse (27a) ein Presssitz (27c) ausgebildet ist.

5. Antriebsanordnung nach einem der vorhergehenden Ansprüche, umfassend mehrere Anbindungspunkte (5) pro Haltebereich (34), wobei die Anbindungspunkte (5) am jeweiligen Haltebereich (34) konzentrisch zur Abtriebswelle (21) angeordnet sind.

6. Antriebsanordnung nach einem der vorhergehenden Ansprüche, ferner umfassend ein in die Antriebseinheit (2) eingeschraubtes Toleranzausgleichselement (4),
wobei das Toleranzausgleichselement (4) derart in die Antriebseinheit (2) eingeschraubt ist, dass das Toleranzausgleichselement (4) an einer Innenseite (32a) der zweiten Wand (32) anliegt, um einen Spalt (40) zwischen der Antriebseinheit (2) und der zweiten Wand (32) zu überbrücken.

7. Antriebsanordnung nach einem der vorhergehenden Ansprüche, wobei das Toleranzausgleichselement (4) eine Hohlschraube mit einem Außengewinde (4) und einem Innengewinde (47) ist, insbesondere wobei das Außengewinde (46) und das Innengewinde (47) des Toleranzausgleichselements (4) unterschiedliche Gangrichtungen aufweisen.

8. Antriebsanordnung nach einem der vorhergehenden Ansprüche, ferner umfassend ein Befestigungselement (8), welches die Antriebseinheit (2) in radialer Richtung bezüglich einer Richtung der Motorwelle (22) in der Rahmenschnittstelle (3) fixiert.

9. Antriebsanordnung nach Anspruch 8, wobei das Befestigungselement (8) eine Blindnietmutter (81), welche an der Antriebseinheit (2) befestigt ist, und eine Schraube (82) aufweist.

10. Antriebsanordnung nach Anspruch 9, wobei das Befestigungselement (8) ferner ein Abstandselement (87), welches in der Blindnietmutter (81) angeordnet ist, umfasst.

11. Antriebsanordnung nach einem der vorhergehenden Ansprüche,
- wobei die Rahmenschnittstelle (3) zumindest teilweise rohrförmig ausgebildet ist, und
- wobei zumindest ein Teilbereich der Antriebseinheit (2) innerhalb des rohrförmigen Bereichs der Rahmenschnittstelle (3) angeordnet ist.

12. Elektrofahrrad, umfassend eine Antriebsanordnung (1) nach einem der vorhergehenden Ansprüche.

13. Elektrofahrrad nach Anspruch 12, umfassend einen Fahrradrahmen (101),
- wobei die Rahmenschnittstelle (3) ein Teil des Fahrradrahmens (101) ist, und
- wobei die Rahmenschnittstelle (3) in eine Sattelstütze (102) des Fahrradrahmens (101) integriert ist, oder
- wobei die Rahmenschnittstelle (3) in ein Unterrohr (103) des Fahrradrahmens (101) integriert ist, insbesondere wobei die Rahmenschnittstelle (3) derart ausgerichtet ist, dass die Motorwelle (22) parallel zu einer Verbindungslinie (A) von Naben (105) des Elektrofahrrads (100) ist.

14. Verfahren zur Montage einer Antriebsanordnung (1), insbesondere nach einem der Ansprüche 1 bis 11, vorzugsweise nach einem der Ansprüche 8 bis 11, umfassend die aufeinanderfolgenden Schritte:
- Positionieren einer Antriebseinheit (2) zumindest teilweise zwischen einer ersten Wand (31) und einer zweiten Wand (32) einer Rahmenschnittstelle (3), derart, dass eine Abtriebswelle (21) der Antriebseinheit (2) in jeweils einer Ausnehmung (30) eines Haltebereichs (34) jeder Wand (31, 32) angeordnet ist,
- Fixieren der Antriebseinheit (2) mittels eines Befestigungselements (8) in der Rahmenschnittstelle (3) in radialer Richtung bezüglich einer Richtung einer Motorwelle (22) der Antriebseinheit (2), und
- Befestigen der Antriebseinheit (2) an der ersten Wand (31) und an der zweiten Wand (32) durch Verbinden der Antriebseinheit (2) mit jedem Haltebereich (34) an jeweils mindestens einem Anbindungspunkt (5).
